# EUROPEAN PATENT APPLICATION

(11) **EP 4 227 835 A1**
(43) Date of publication of application: **16.08.2023**
(21) Application number: 22192289.1
(22) Date of filing: 26.08.2022
(51) Int. Cl.: G06F 21/60, G06Q 10/107, G06F 40/205

(54) **MESSAGE PROVIDING SYSTEM AND PROGRAM**

(30) Priority: 09.02.2022 JP 2022018873
(71) Applicant: Fujifilm Business Innovation Corp., Tokyo 107-0052 (JP)
(72) Inventor: BITO, Koji, Yokohama (JP)
(74) Representative: Meissner Bolte Partnerschaft mbB

(57) **Abstract**

A message providing system includes an acquisition unit that acquires user information about a user who communicates a message in a chat room in a message service, and a processor configured to run a program, determine whether a process for a file is needed based on the user information in a case where a message that shares the file is transmitted, inquire at a first user who is a transmitter of the message about the process if it is determined that the process for the file is needed and perform the process for the file in a case where an instruction for performing the process is received from the first user.

## Description

### Background

### (i) Technical Field

The present disclosure relates to a message providing system and a program.

### (ii) Related Art

Japanese Unexamined Patent Application Publication No. 2013-45384 discloses an access control program and an access control system capable of appropriately granting an access right to a stored content while security is ensured. That is, the access control system that is disclosed includes an access right granting support unit and a service unit. The access right granting support unit determines whether a storage unit that stores the content and a user that is notified of a location at which the content is stored have the access right to the content, determines the confidentiality of the content in accordance with a predetermined condition if the storage unit and the user do not have the access right, and grants the user a temporary access right to the content if it is determined that the confidentiality is not high. The service unit enables the user who is granted the access right or the temporary access right to the content to view the content.

### Summary

As for a known technique for a message service in which a user communicates a message in a chat room, a system appropriately checks about a change in an access right to a file depending on the setting of the access right to the file when the user shares the file with another user.

For example, in some cases where a file that is accessible by all users who know a location at which the file is stored is transmitted, the users are not inquired about a change in an access right. In some cases where a file that is accessible only by a specific user is transmitted, however, the user is inquired about a change in an access right. When the file that is accessible only by the specific user is transmitted, the inquiry about the change in the access right is conducted, whether a user who is a receiver of the file is the specific user who is accessible to the file is checked by a user who is a transmitter, and the access right to the file is granted to the user who is the receiver as needed. When the file is transmitted, user information about the receiver is checked, and a process for the file is performed depending on the user information. This is a complicated operation for the user who is the transmitter.

Accordingly, it is an object of the present disclosure to provide a message providing system for an improvement in operability for a transmitter of a file in the case where a process for the file is performed depending on user information about a receiver during the transmission of the file in message communication.

According to a first aspect of the present disclosure, there is provided a message providing system including an acquisition unit that acquires user information about a user who communicates a message in a chat room in a message service, and a processor configured to run a program, determine whether a process for a file is needed based on the user information in a case where a message that shares the file is transmitted, inquire at a first user who is a transmitter of the message about the process if it is determined that the process for the file is needed, and perform the process for the file in a case where an instruction for performing the process is received from the first user.

According to a second aspect of the present disclosure, there is provided the message providing system according to the first aspect in which the user information is whether a second user who is a receiver of the message has an access right to the file, and the processor is configured to inquire at the first user about whether the access right is granted to the second user if it is determined that the second user does not have the access right to the file.

According to a third aspect of the present disclosure, there is provided the message providing system according to the second aspect in which the processor is configured to inquire only at the first user about whether the access right is granted and is configured not to inquire at the second user.

According to a fourth aspect of the present disclosure, there is provided the message providing system according to the second aspect in which the processor is configured to inquire at the first user and the second user about whether the access right is granted.

According to a fifth aspect of the present disclosure, there is provided the message providing system according to the first aspect in which the user information is a content of the message that is transmitted by the first user.

According to a sixth aspect of the present disclosure, there is provided the message providing system according to the fifth aspect in which the processor is configured to inquire at a second user about whether the file is checked if the content of the message contains wording that represents a check.

According to a seventh aspect of the present disclosure, there is provided the message providing system according to the first aspect in which the user information is at least a file size, resolution, or a file format that is desired by a second user for the file, and the processor is configured to inquire about whether at least a file size, resolution, or a file format of the file is converted if at least the file size, the resolution, or the file format of the file does not match the file size, the resolution, or the file format that is desired by the second user.

According to an eighth aspect of the present disclosure, there is provided the message providing system according to the first aspect in which the user information is at least a file size or resolution that is desired by a second user for the file, and the processor is configured to inquire about whether at least the file size or the resolution of the file is converted if the file size of the file is equal to or more than a threshold, or the resolution of the file is less than a threshold.

According to a ninth aspect of the present disclosure, there is provided the message providing system according to the seventh or eighth aspect in which the processor is configured to inquire at the first user and the second user.

According to a tenth aspect of the present disclosure, there is provided a message providing system including an acquisition unit that acquires user information about a user who communicates a message in a chat room in a message service, and a processor configured to run a program, determine whether a process for a file is needed based on the user information in a case where a message that shares the file is transmitted, select a first user who is a transmitter of the message or a second user who is a receiver of the message depending on a kind of the process to inquire about the process if it is determined that the process for the file is needed, and perform the process for the file in a case where an instruction for performing the process is received.

According to an eleventh aspect of the present disclosure, there is provided the message providing system according to the tenth aspect in which the processor is configured to inquire at the first user if the kind of the process includes a single kind and is configured to inquire at the second user if the kind of the process includes multiple kinds.

According to a twelfth aspect of the present disclosure, there is provided the message providing system according to the eleventh aspect in which the user information is at least a file size, resolution, or a file format that is desired by the second user for the file, and the processor is configured to inquire at the second user if at least a file size, resolution, or a file format of the file does not match the file size, the resolution, or the file format that is desired by the second user and if the kind of the process includes multiple kinds because at least the file size, the resolution, or the file format that is desired by the second user for the file differs from a file size, resolution, or a file format that is requested by another second user for the file.

According to a thirteenth aspect of the present disclosure, there is provided the message providing system according to the eleventh aspect in which the user information is at least a file size, resolution, or a file format that is desired by the second user for the file, and the processor is configured to inquire at the first user if at least a file size, resolution, or a file format of the file does not match the file size, the resolution, or the file format that is desired by the second user and if the kind of the process includes a single kind because at least the file size, the resolution, or the file format that is desired by the second user for the file is the same as a file size, resolution, or a file format that is requested by another second user for the file.

According to a fourteenth aspect of the present disclosure, there is provided the message providing system according to the first or tenth aspect in which the processor is configured to inquire by using message transmission with a chatbot.

According to a fifteenth aspect of the present disclosure, there is provided a program causing a processor to execute a process including communicating a message to a user in a chat room in a message service, determining whether a process for a file is needed based on user information about the user in a case where a message that shares the file is transmitted, inquiring at a first user who is a transmitter of the message about the process if it is determined that the process for the file is needed, and performing the process for the file in a case where an instruction for performing the process is received from the first user.

According to the first, tenth, and fifteenth aspects, operability for the transmitter of the file when the file is transmitted can be improved in message communication.

According to the second, third, and fourth aspects, the access right can be granted to the second user when the second user does not have the access right to the file.

According to the fifth and sixth aspects, a process depending on the content of the message can be performed.

According to the seventh, eighth, ninth aspects, a process depending on at least the file size, the resolution, or the file format that is desired by the second user for the file can be performed.

According to the eleventh, twelfth, and thirteenth aspects, a process that is desired by the second user can be performed.

According to the fourteenth aspect, operability for a file operator can be improved by using a chat with a chatbot.

### Brief Description of the Drawings

An exemplary embodiment of the present disclosure will be described in detail based on the following figures, wherein:
Fig. 1 illustrates a system configuration diagram of an exemplary embodiment;
Fig. 2 illustrates a functional block diagram of a bot server according to the exemplary embodiment;
Fig. 3 illustrates a configuration block diagram of the bot server according to the exemplary embodiment;
Fig. 4 illustrates an example (a first example) of a screen according to the exemplary embodiment;
Fig. 5 illustrates an example (a second example) of the screen according to the exemplary embodiment;
Fig. 6 illustrates an example (a third example) of the screen according to the exemplary embodiment;
Fig. 7A illustrates a schematic diagram (a first diagram) of a process according to the exemplary embodiment;
Fig. 7B illustrates a schematic diagram (a second diagram) of a process according to the exemplary embodiment;
Fig. 7C illustrates a schematic diagram (a third diagram) of a process according to the exemplary embodiment;
Fig. 8A illustrates a schematic diagram (a fourth diagram) of a process according to the exemplary embodiment;
Fig. 8B illustrates a schematic diagram (a fifth diagram) of a process according to the exemplary embodiment;
Fig. 8C illustrates a schematic diagram (a sixth diagram) of a process according to the exemplary embodiment;
Fig. 9A illustrates a schematic diagram (a seventh diagram) of a process according to the exemplary embodiment;
Fig. 9B illustrates a schematic diagram (an eighth diagram) of a process according to the exemplary embodiment;
Fig. 9C illustrates a schematic diagram (a ninth diagram) of a process according to the exemplary embodiment;
Fig. 10 illustrates a schematic diagram (a tenth diagram) of a process according to the exemplary embodiment;
Fig. 11 illustrates an example (a fourth example) of the screen according to the exemplary embodiment;
Fig. 12 illustrates an example (a fifth example) of the screen according to the exemplary embodiment;
Fig. 13 illustrates an example (a sixth example) of the screen according to the exemplary embodiment;
Fig. 14 illustrates an example (a seventh example) of the screen according to the exemplary embodiment;
Fig. 15A illustrates a schematic diagram (an eleventh diagram) of a process according to the exemplary embodiment;
Fig. 15B illustrates a schematic diagram (a twelfth diagram) of a process according to the exemplary embodiment;
Fig. 16 illustrates a flowchart of a process according to the exemplary embodiment; and
Fig. 17 illustrates a rule according to the exemplary embodiment.

### Detailed Description

An exemplary embodiment of the present disclosure will hereinafter be described with reference to the drawings where a message service in which a user communicates a message in a chat room is taken as an example.

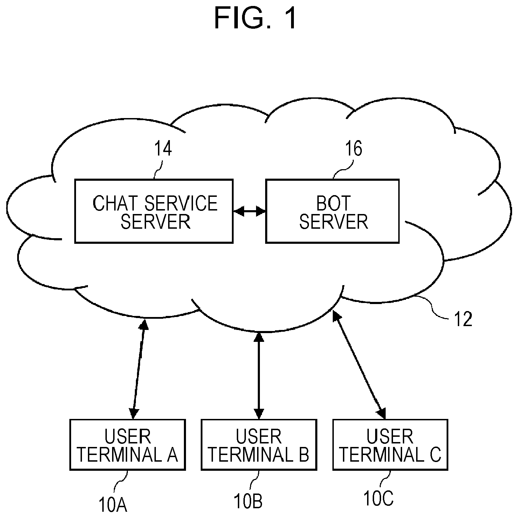

Fig. 1 illustrates the entire structure of a message providing system that provides a message service according to the exemplary embodiment. The message providing system includes a user terminal A (10A) to a user terminal C (10C), and a chat service server 14 and a bot server 16 on a cloud 12. The user terminal A (10A) to the user terminal C (10C) are terminals that are used by users who use the message service and are information terminals such as smartphones, tablet terminals, or personal computers (PCs). In Fig. 1, three terminals of the user terminal A (10A), the user terminal B (10B), and the user terminal C (10C) are illustrated. However, the number thereof is freely selected. The users operate the user terminal A (10A) to the user terminal C (10C), access the chat service server 14 on the cloud 12, and communicate a message to another user or a chatbot. In the following description, a user A operates the user terminal A, a user B operates the user terminal B, and a user C operates the user terminal C. The user terminal A (10A) to the user terminal C (10C) and the chat service server 14 are connected to each other so as to be capable of transmitting and receiving data by using a wired or wireless communication network. For example, the communication network is a public line such as the internet but may be a private line.

The "chatbot" described herein means a software robot program that is run in the message service and that is designed (personified) to simulate a dialogue between people by using voices and/or characters. The chatbot operates so as to detect a specific word or phrase in a message that is inputted by a user and output a response that is suitable and that is prepared in advance. The chatbot is used by a messenger service account such as a company or a store that is assigned for an advertisement or commerce. The users enjoy conversations with the chatbot in the chat room through natural message communication and request the chatbot to provide various services.

The chat service server 14 is a cloud server that is disposed on the cloud 12 and that provides a chat service. The chat service server 14 includes one or multiple server computers. The chat service server 14 performs the whole of processing related to message communication such as a process of transmitting and receiving a message to or from any one of the user terminal A to the user terminal C and a process of displaying a message transmission and reception display screen. The chat service server 14 is capable of forming a group of three or more users and is capable of processing message communication in the group (a group chat) in addition to a process of message communication between two users. The chat service server 14 also processes message communication with the chatbot that is provided by the bot server 16 in cooperation with the bot server 16. User-chatbot message communication includes message communication between a single user and the chatbot and message communication between multiple users and the chatbot.

The bot server 16 is a server in which a software robot program of the chatbot that communicates a message with a user is installed and runs the program.

The bot server 16 cooperates with the chat service server 14 by using a specific application programming interface (API), communicates a message with a user, and automatically responds to the message from the user to give a message. The specific API is an API for using the chat service server 14. The format of the API is freely selected. For example, an API in the format of Javascript Object Notation (JSON) is used, JSON data in the defined format is transmitted to a specific URL for the chat service server 14 by using POST or GET, and data in the format of JSON is received as a result.

According to the present exemplary embodiment, in the case where a user (referred to as a first user) transmits a message that shares a file with another user (referred to as a second user) in the chat room, the bot server 16 determines whether a process for the file is needed based on user information. The "case where a user transmits a message" described herein includes the case where the first user is to transmit the message to the second user and the case where the first user has transmitted the message to the second user. Specifically, the case includes cases before and after the first user transmits an instruction (an instruction by pressing a "transmission" button or an enter key) for transmitting the message to the second user. Whether the process for the file is needed is determined based on the user information in the case where the first user is to transmit the message to the second user is specifically as follows. Whether the process for the file is needed is determined based on the user information while the first user is producing the message to be transmitted to the second user. If it is determined that the process for the file is needed, a message for inquiring at the first user who is the transmitter of the message about the process is transmitted. In the case where an instruction for performing the process is received from the first user, the process for the file is performed.

The user information contains user information about the first user and user information about the second user and also contains user attribution information and user desire information. For example, the user attribution information contains information about a chat room to which each user belongs and information about the access right to the file. The content of the message that is posted by the first user may be included in the user information about the first user.

Examples of the process for the file include a process of granting the access right to the file and a process of converting at least the size, the resolution, or the format of the file.

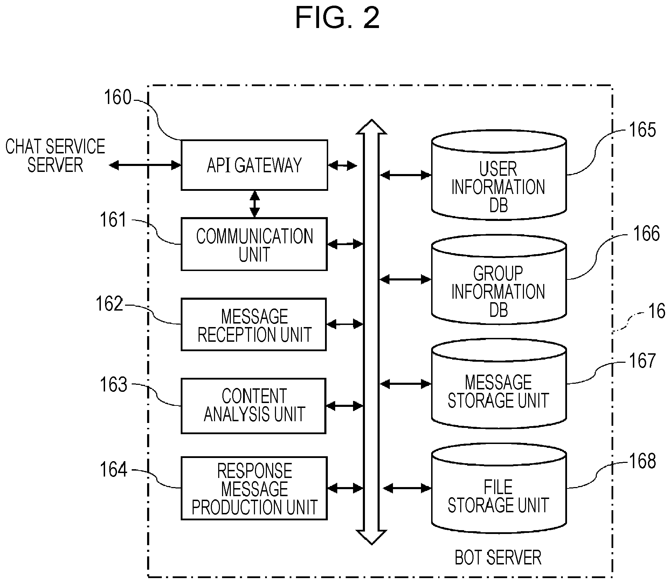

Fig. 2 illustrates a functional block diagram of the bot server 16. The bot server 16 includes functional blocks such as an API gateway 160, a communication unit 161, a message reception unit 162, a content analysis unit 163, a response message production unit 164, a user information database (DB) 165, a group information database (DB) 166, a message storage unit 167, and a file storage unit 168.

The communication unit 161 communicates with the chat service server 14. The communication unit 161 communicates with the chat service server 14 via the API gateway 160 and exchanges a message. The communication unit 161 receives a message from the chat service server 14 via the API gateway 160, that is, a message from any one of the user terminal A to the user terminal C and outputs the message to the message reception unit 162. The communication unit 161 transmits a response message that is produced by the response message production unit 164 to the chat service server 14 via the API gateway 160, that is, to any one of the user terminal A to the user terminal C. The communication unit 161 acquires information about the users who use the chat service server 14.

The message reception unit 162 receives the message from the communication unit 161 and outputs the message to the content analysis unit 163. In some cases, the message contains an attached file and contains a text for announcing the intention of the transmitter behind the attached file. The message reception unit 162 stores the received message in the message storage unit 167 in a time series.

The content analysis unit 163 analyzes the content of the received message and determines whether a process for the file attached to the message is needed.

Specifically, in the case where the message contains the attached file, whether a user other than the transmitter of the message in the same chat room, that is, the second user who receives the message has the access right to the attached file is determined. Whether the message contains a specific text such as a text that represents a "check" or a "review" is also determined. In addition, the file size, the resolution, the format of the attached file, for example, is checked, and whether the file size, the resolution, and the format, for example, match a size, resolution, and a format that are desired by the user who is the receiver is determined. As for the file size, the resolution, and the format of the attached file, whether the file size is larger than a predetermined threshold, whether the magnitude of the resolution of the file is smaller than a predetermined threshold, and whether the format of the file is a specific format may be determined instead of the size, the resolution, and the format that are desired by the user who is the receiver.

A method of extracting a text from the message for parsing is freely selected. For example, the inputted message is divided into morphemes, and nouns, adjectives, verbs, and interrogative pronouns are extracted as keywords.

The content analysis unit 163 determines whether the process for the attached file is needed depending on the result of parsing and instructs the response message production unit 164 to produce a response message for the first user who is the transmitter of the message and the second user who is the receiver of the message if it is determined that the process is needed.

The response message production unit 164 produces the response message in response to the instruction from the content analysis unit 163 and transmits the response message to the chat service server 14, that is, any one of the user terminal 10A to the user terminal 10C via the communication unit 161.

When a reply message is transmitted from the user terminal to reply to the response message that is produced by the response message production unit 164, the message reception unit 162 receives the reply message, and the content analysis unit 163 analyzes the content of the reply message.

The content analysis unit 163 determines the process for the attached file depending on the content of the reply message against the response message from the user terminal and performs the process. For example, the access right to the attached file is granted to the second user depending on the content of the reply message against the response message related to the access right to the attached file being granted to the second user.

The user information DB 165 stores the information about the user who uses the chat service server 14 that is acquired by the communication unit 161 in a table. Examples of the user information include a user ID, information about the right of each user, and the size, the resolution, and the format that are desired by each user. The content analysis unit 163 accesses the user information DB 165, acquires information about the stored user information about each user, more specifically, the access right of the second user, the file size that is desired by the second user, the resolution of the file that is desired by the second user, and the file format that is desired by the second user and determines whether the process for the attached file is needed.

According to the present exemplary embodiment, the content analysis unit 163 analyzes the content of the message, the user information DB 165 stores the analyzed content, and this may be used as a piece of the user information.

The user information that is stored in the user information DB 165 may be appropriately updated in response that the content analysis unit 163 performs the process. An example is as follows. The user B is the second user. In the initial state, the user B does not have the access right to the attached file. In the case where the content analysis unit 163 determines that the access right is granted to the user B, information about the user B that is stored in the user information DB 165 is updated from the "access right being absent" to the "access right being present".

The group information DB 166 stores information about a chat group (a chat room). Specifically, the user ID of a user who belongs to a group is stored for every group (every room). The content analysis unit 163 accesses the group information DB 166 and identifies a user group that participates in a chat room. For example, in the case where a user group that belongs to a chat room is formed by the user A, the user B, and the user C, and the user A transmits a message in the chat room, the content analysis unit 163 identifies the user A as the first user, and the other users B and C in the same chat room as the second users.

The message storage unit 167 and the file storage unit 168 store a message and an attached file that are transmitted from a user terminal.

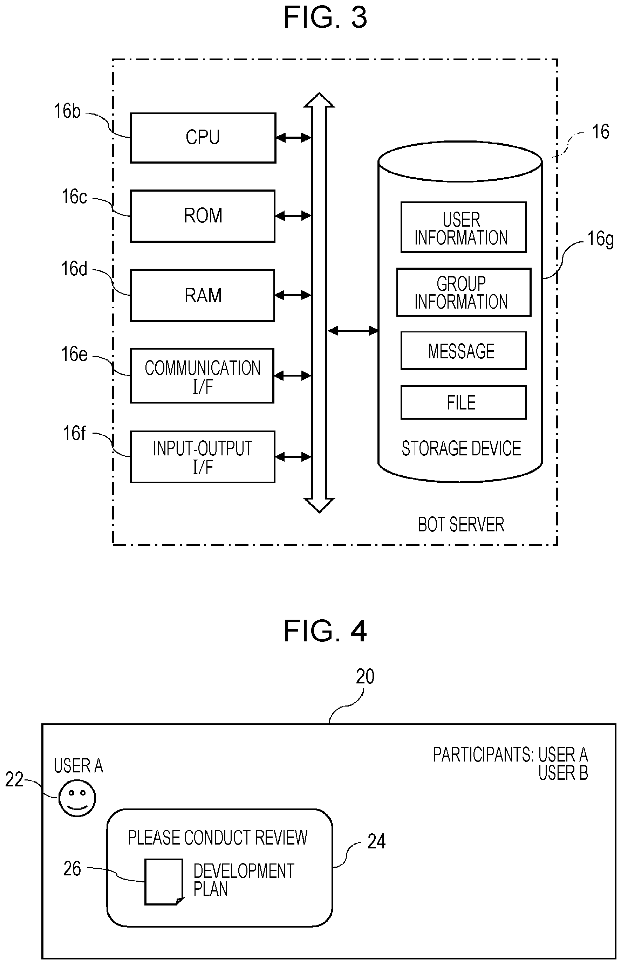

Fig. 3 illustrates a configuration block diagram of the bot server 16. The bot server 16 includes a single or multiple server computers, a single or multiple CPUs 16b, a ROM 16c, a RAM 16d, a communicate interface (I/F) 16e, and an input-output I/F 16f, and a storage device 16g.

The single or multiple CPUs 16b read a bot application that is stored in the ROM 16c or the storage device 16g and enables a chatbot function to be performed by using the RAM 16d as a working memory. That is, a response to a message from a user is automatically made, and a response message for the user is produced as needed. The single or multiple CPUs 16b perform the bot application to enable the message reception unit 162, the content analysis unit 163, the response message production unit 164, and the API gateway 160 in Fig. 2 to function.

The communication I/F 16e is used for message communication with the chat service server 14.

The input-output I/F 16f transmits and receives data to and from an input device such as a keyboard or a mouse and an image output device such as a display device.

The storage device 16g includes a non-volatile memory such as a hard disk drive (HDD) a solid state drive (SSD). The storage device 16g stores the bot application and also stores a user information table, a group information table, a message management table, and a file management table. The storage device 16g enables a storage unit including the user information DB 165, the group information DB 166, the message storage unit 167, and the file storage unit 168 in Fig. 2 to function.

According to the present exemplary embodiment, the single or multiple CPUs run the software robot program for the chatbot function. However, a part of the chatbot may function by using hardware processing instead of processing that is performed by running a program.

In the embodiments above, the term "processor" refers to hardware in a broad sense. Examples of the processor include general processors (e.g., CPU: Central Processing Unit) and dedicated processors (e.g., GPU: Graphics Processing Unit, ASIC: Application Specific Integrated Circuit, FPGA: Field Programmable Gate Array, and programmable logic device).

In the embodiments above, the term "processor" is broad enough to encompass one processor or plural processors in collaboration which are located physically apart from each other but may work cooperatively. The order of operations of the processor is not limited to one described in the embodiments above, and may be changed.

Operation according to the present exemplary embodiment will now be described in detail by using an example of a screen that is displayed on a user terminal.

Fig. 4 illustrates a screen 20 that is displayed on a display device of the user terminal 10A that is operated by the user A. The screen 20 is a chat screen in a chat room. The user A and the user B participate in the chat room.

The user A operates the user terminal 10A and posts a message to a participant in the chat room, that is, the user B. The user A who is the transmitter corresponds to the first user, and the user B who is the receiver corresponds to the second user. An icon 22 that is a symbol figure of the user A is displayed on the screen 20. For example, a message 24 that "please conduct a review" is posted. An attached file 26 the name of which is a "development plan" is attached to the message 24. The user A may freely set the size, the resolution, or the format of the attached file 26.

The chatbot that functions on the bot server 16 parses the content of the message 24 that is posted by the user A and determines whether the attached file 26 is present. If it is determined from the content of the message 24 that the attached file 26 is present and that the user B needs to access the attached file 26, the user information DB 165 is accessed, the user information about the user B is acquired, and whether the user B has the access right to the attached file 26 is checked.

Regardless of the result of analysis of the content of the message 24, it may be determined that the user B needs to access the attached file 26 merely on condition that the attached file 26 is present. A condition under which it is determined that the access is needed depends on a predetermined rule.

If the user B has the access right to the attached file 26, the chatbot performs no process. The user B checks the attached file 26 and the message 24 of the user A that is displayed on a screen of the user terminal 10B that is operated by the user B and checks the content of the attached file 26 without problem because the user B has the access right.

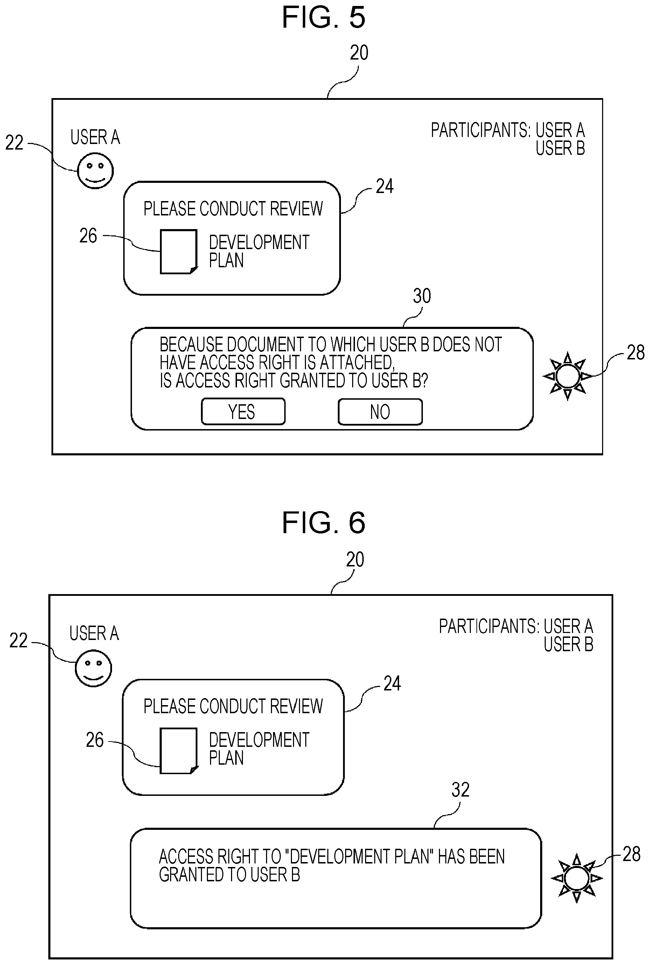

If the user B does not have the access right to the attached file 26, the chatbot notifies the user A of the fact that the user B does not have the access right of the attached file 26 in response to the determination that the user B does not have the access right and posts, to the user A, a message for inquiry about whether the access right is granted to the user B. For example, as illustrated in Fig. 5, the chatbot posts a message 30 that "because a document to which the user B does not have the access right is attached, is the access right granted to the user B?".

In Fig. 5, an icon 28 that is a symbol figure of the chatbot is displayed on the screen 20 of the user terminal 10A of the user A, and the message 30 is displayed together with the icon 28. A "YES" button and a "NO" button are displayed in the message 30. The user A may select one of these.

As described with reference to the functional block in Fig. 2, the content analysis unit 163 determines whether the user B has the access right to a specific document "development plan" and instructs the response message production unit 164 to produce a response message if it is determined that the user B does not have the access right. The response message production unit 164 produces the response message that "because a document to which the user B does not have the access right is attached, is the access right granted to the user B?" in accordance with an instruction from the content analysis unit 163 and outputs the response message to the communication unit 161. The communication unit 161 transmits the response message to the user terminal 10A that is operated by the user A via the API gateway 160 and the chat service server. The user A is able to recognize that the user B does not have the access right to the attached file 26 by viewing the screen 20 illustrated in Fig. 5 and readily grant the user B the access right to the attached file 26 by replying to the inquiry from the chatbot.

That is, in the case where the access right is granted to the user B, the user A operates the "YES" button that is contained in the message 30. The chatbot grants the user B the access right to the attached file 26 in response to the reply "YES" from the user terminal 10A and updates information about the access right of the user B that is stored in the user information DB 165 from "absence" to "presence". A message that represents that the access right has been granted to the user B is posted. For example, as illustrated in Fig. 6, the chatbot posts a message 32 that the "access right to the "development plan" has been granted to the user B".

As described with reference to Fig. 2 again, when the message reception unit 162 receives the reply "YES" from the user terminal 10A, the content analysis unit 163 analyzes the content of the reply, confirms that the content is a positive content of "YES", and updates the information about the access right of the user B that is stored in the user information DB 165. The response message production unit 164 is instructed to produce a response message. The response message production unit 164 produces a response message that the "access right to the "development plan" has been granted to the user B" in response to the instruction from the content analysis unit 163 and outputs the response message to the communication unit 161. The communication unit 161 transmits the response message to the user terminal 10A that is operated by the user A via the API gateway 160 and the chat service server.

It is thought that the user A who posts the message 24 ought to determine whether the access right is granted to the user B. Accordingly, the message 32 that is posted by the chatbot is displayed only on the user terminal 10A that is operated by the user A but is not displayed on the user terminal 10B that is operated by the user B. This means that granting the user B the access right is controlled only by message communication between the user A and the chatbot without involving the user B. It is not necessary for the user A to check whether the user B has the access right in advance before the message 24 is transmitted, and accordingly, operability is improved.

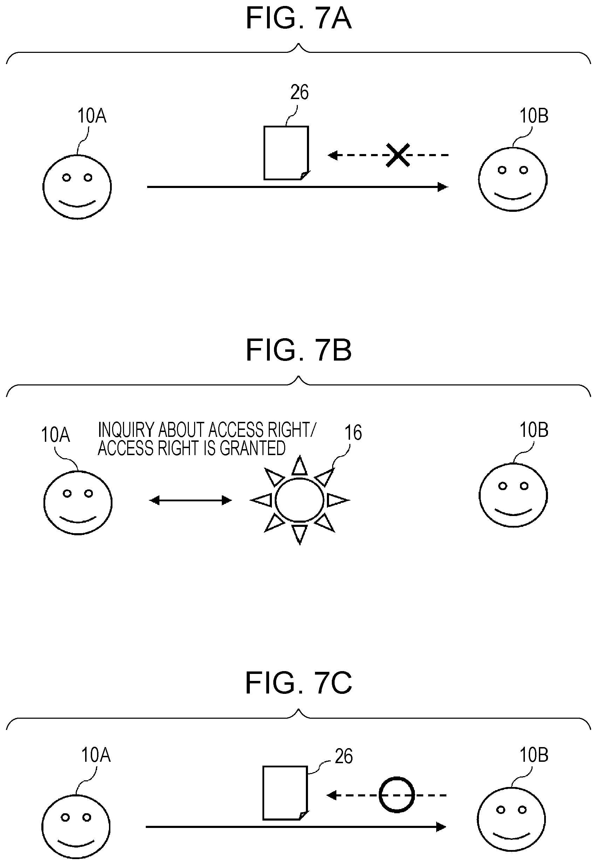

Fig. 7A to Fig. 7C schematically illustrate a process of granting the user B the access right. These figures illustrate the flow of processing among the user terminal 10A that is operated by the user A, the user terminal 10B that is operated by the user B, and the bot server 16 that functions as the chatbot.

Fig. 7A illustrates a state in which a message is posted (transmitted) from the user terminal 10A to the user terminal 10B, and the attached file 26 is attached to the message. When the user B does not have the access right to the attached file 26 (a mark "x" represents that the user B does not have the access right) in the initial state, the user B is unable to open the attached file 26.

The bot server 16 analyzes the message from the user terminal 10A and analyzes that the attached file 26 the name of which is the "development plan" is attached to the message. It is determined from the result of analysis that information about whether the user B has the access right is needed, the user information DB 165 is accessed, access information about the user B is acquired, and whether the user B has the access right is determined. More specifically, the bot server 16 accesses the group information DB 166, identifies the user A as the first user who is the transmitter of the message, identifies the user B as the second user who is the receiver of the message, acquires the access information that is contained in the user information about the identified user B, and determines whether an access right is present or absent.

The "access right" described herein means an access right to a specific document and includes a right to operate the specific document. Examples of the right to operate the document include "reading", "writing", "printing", and "editing". Accordingly, whether an access right is present or absent may be determined based on a combination of the content of the message and the right to operate the document. Specifically, even though the content of the message includes a "review", and the right to operate the document includes "reading" but does not include "writing" or "editing", it may be determined that the access right is present.

Fig. 7B illustrates a process in the case where the user B does not have the access right to the attached file 26 where the bot server 16 automatically produces a message for inquiring at the user A about whether the access right is granted to the user B because the user B does not have the access right and transmits the message to the user terminal 10A. The message is transmitted only to the user terminal 10A but is not transmitted to the user terminal 10B. When a reply message that the access right is granted to the user B is received from the user terminal 10A (the reply "YES"), the bot server 16 accesses the user information DB 165 and updates the access right of the user B, and the user B is permitted to access the attached file 26. The bot server 16 that updates the access right of the user B transmits, to the user terminal 10A, a message that represents this, that is, a message that the access right has been granted to the user B.

Fig. 7C illustrates a state in which the bot server 16 updates the access right of the user B. The user terminal 10B access and opens the attached file 26 (a mark **"O"** in the figure represents that access is possible). The user B is able to review the content of the attached file 26.

A certain time is needed until the access right is granted to the user B after the user A transmits the message to the user B. Accordingly, the user B is unable to access the attached file 26 during the time. For this reason, when it is recognized that the user B accesses the attached file 26 but the access is denied, the bot server 16 may automatically produce a message that "please wait while the "access right is adjusted" and transmit the message to the user B.

Fig. 7A to Fig. 7C illustrate the case where the user A and the user B participate in the chat room. However, it is supposed that the user C participates in the chat room in addition to the user A and the user B, and not only the user A but also the user C has the right to determine whether the access right is granted to the user B.

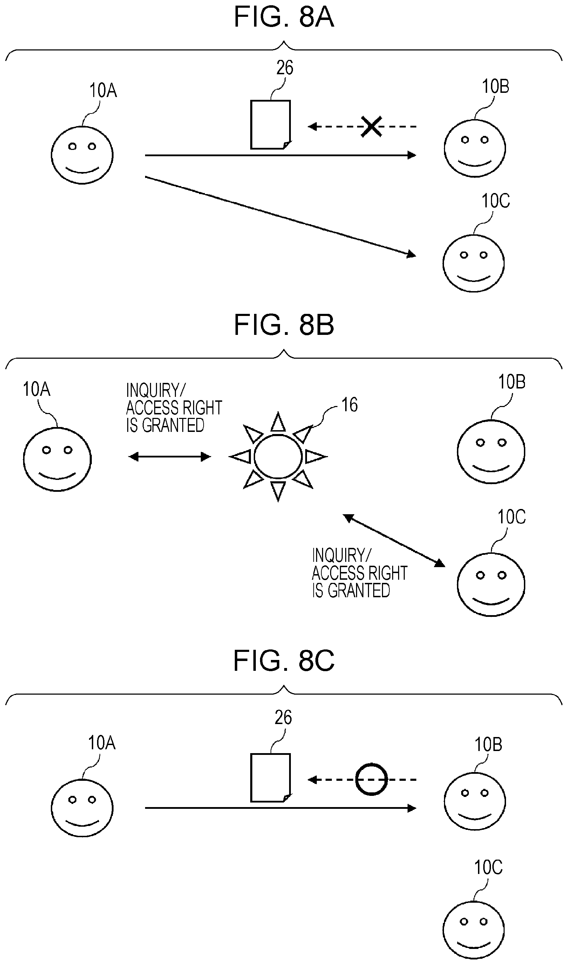

Fig. 8A to Fig. 8C schematically illustrate a situation in a process in the case where the user C has the right to grant the access right.

Fig. 8A illustrates a state in which a message is posted (transmitted) from the user terminal 10A to the user terminal 10B and the user terminal 10C, and the attached file 26 is attached to the message. When the user B does not have the access right to the attached file 26 (a mark "x" represents that access right is absent) in the initial state, the user B is unable to open the attached file 26.

The bot server 16 analyzes the message from the user terminal 10A and analyzes that the attached file 26 the name of which is the "development plan" is attached to the message. It is determined from the result of analysis that information about whether the user B and the user C who are the second users have the access right is needed, the user information DB 165 is accessed, access information about the user B and the user C is acquired, and whether the user B and the user C have the access right is determined. At this time, the user C has the access right, but the user B does not have the access right. The user C has the right to determine whether the access right is granted.

Fig. 8B illustrates a process in the case where the user B does not have the access right to the attached file 26 where the bot server 16 automatically produces a message for inquiring at the user A about whether the access right is granted to the user B because the user B does not have the access right and transmits the message to the user terminal 10A. The bot server 16 also automatically produces a message for inquiring at the user C about whether the access right is granted to the user B because the user B does not have the access right and transmits the message to the user terminal 10C. That is, inquiry at the user A who is the first user is conducted, and inquiry at the user C who is the second user is conducted. This message is not transmitted to the user terminal 10B.

When a reply message that the access right is granted to the user B is received from the user terminal 10A or the user terminal C (the reply "YES"), the bot server 16 accesses the user information DB 165 and updates the access right of the user B, and the user B is permitted to access the attached file 26. The bot server 16 that updates the access right of the user B transmits, to the user terminal 10A and the user terminal C, a message that represents this, that is, a message that the access right has been granted to the user B.

Fig. 8C illustrates a state in which the bot server 16 updates the access right of the user B. The user terminal 10B accesses and opens the attached file 26 (a mark **"O"** in the figure represents access is possible). The user B is able to review the content of the attached file 26.

Fig. 8A to Fig. 8C, the user terminal 10A and the user terminal 10C reply to the inquiry from the bot server 16 about granting the access right. In some cases, however, the adjustment thereof is needed depending on the contents of answers from the user terminal 10A and the user terminal 10C. That is, combinations of the reply may include (1) "YES" from both of the user terminal 10A and the user terminal 10C, (2) "YES" or no reply from the user terminal 10A and "NO" or no reply from the user terminal 10C, (3) "NO" or no reply from the user terminal 10A and "YES" or no reply from the user terminal 10C, and (4) "NO" from both of the user terminal 10A and the user terminal 10C. In the cases of (1) and (4), there is no problem. In the cases of (2) and (3), adjustment is needed.

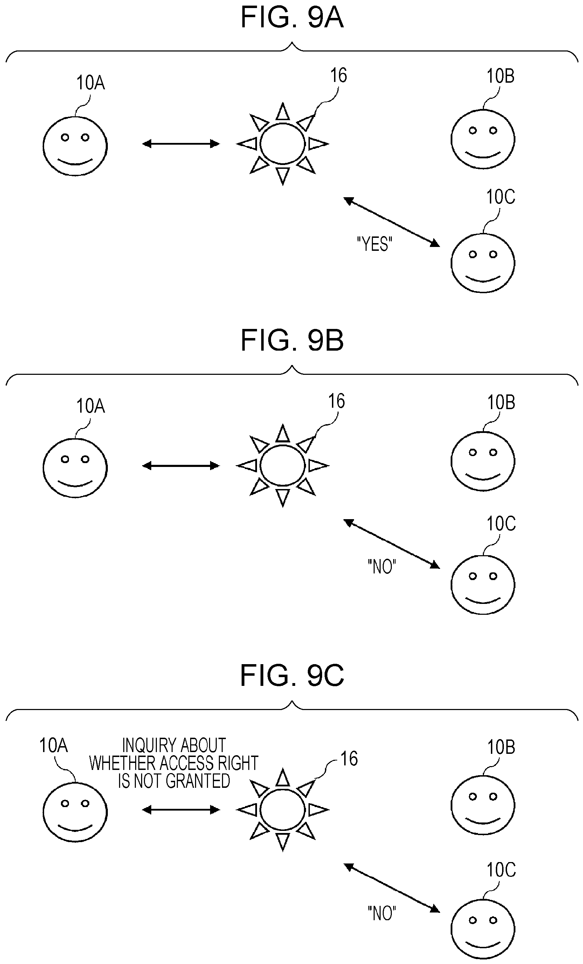

Fig. 9A illustrates a state in which the bot server 16 transmits a message to the user terminal 10A and the user terminal 10C, and only the reply from the user terminal 10C is "YES". In this case, the bot server 16 grants the user B the access right in response to the reply from the user terminal 10C. The reason is that since the user A transmits the message that "please conduct a review", the user A presumably agrees to grant the user B the access right unless there is a particular circumstance.

Fig. 9B illustrates a state in which the bot server 16 transmits a message to the user terminal 10A and the user terminal 10C, and the reply of the user terminal 10C is "NO". In this case, the bot server 16 transmits a message for inquiring about whether the access right is not granted to the user B only to the user terminal 10A that transmits the message that "please conduct a review" in response to the reply "NO" from the user terminal 10C.

When the user terminal 10A replies to the inquiry such that it is agreed that the access right is not granted, the bot server 16 maintains the access right of the user B in the initial state and does not grant the access right. When the user terminal 10A replies to the inquiry such that it is not agreed that the access right is not granted, the bot server 16 may determine whether the access right is granted to the user B in accordance with a predetermined rule because there are consequently different replies about whether the access right is granted to the user B. Examples of the rule for determination are as follows:
the user A who posts the message is prioritized,
the user C who has the access right is prioritized, and
the access right is granted only in the case where the opinion of the user A and the opinion of the user C match each other.

There is a possibility that the participants in the chat room increase. An example of this case is that a user D participates therein in addition to the user A, the user B, and the user C.

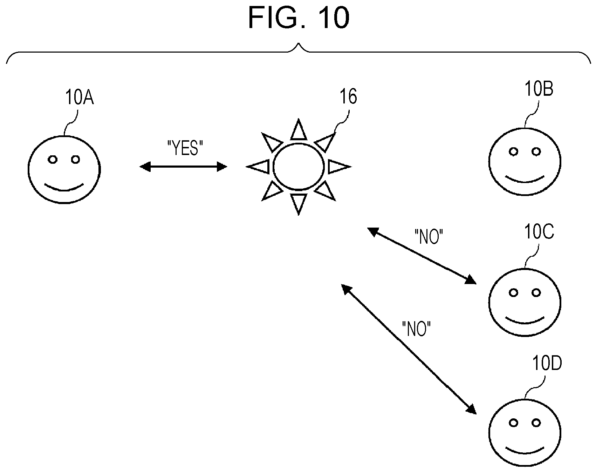

Fig. 10 illustrates a state in which the participants are the user A, the user B, the user C, and the user D, a message is posted (transmitted) from the user terminal 10A to the user terminal 10B, the user terminal 10C, and a user terminal 10D, and the attached file 26 is attached to the message. When the user B does not have the access right to the attached file 26 in the initial state, the user B is unable to open the attached file 26.

The bot server 16 analyzes the message from the user terminal 10A and analyzes that the attached file 26 the name of which is the "development plan" is attached to the message. It is determined from the result of analysis that information about whether the user B, the user C, and the user D have the access right is needed, the user information DB 165 is accessed, access information about the user B, the user C, and the user D is acquired, and whether the user B, the user C, and the user D have the access right is determined. At this time, the user C and the user D have the access right, but the user B does not have the access right. The user C and the user D have the right to determine whether the access right is granted.

The bot server 16 automatically produces a message for inquiring about whether the access right is granted to the user B because the user B does not have the access right and transmits the message to the user terminal 10A, the user terminal 10C, and the user terminal 10D. This message is not transmitted to the user terminal 10B. In response to this, the reply from the user terminal 10A is "YES", the reply from the user terminal 10C is "NO", and the reply from the user terminal 10D is "NO". In this case, the bot server 16 determines whether the access right is granted to the user B in accordance with a predetermined rule. For example, in the case where the rule for determination is a majority vote of multiple users, the result of the majority vote is "NO" in an example in Fig. 10, and accordingly, the bot server 16 maintains the access right of the user B in the initial state in accordance with the rule for determination.

In the case where the access right is granted to the user B in accordance with the rule for determination, the user B is not notified of this. In the case where it is denied that the access right is granted to the user B, the user B may be notified of this. For example, a message that the "access right to the attached file is denied" is automatically produced and transmitted to the user terminal 10B.

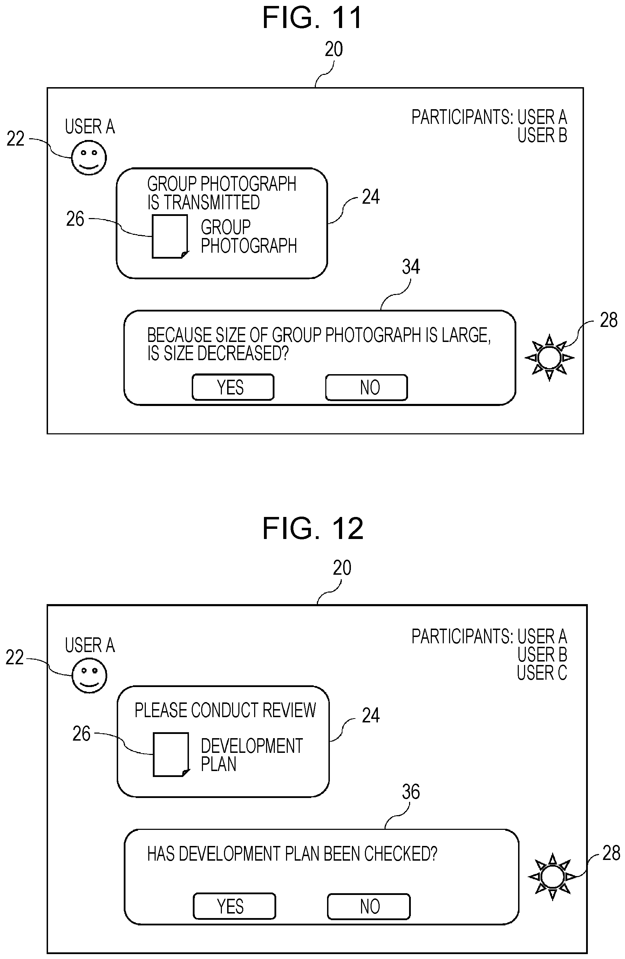

Fig. 11 illustrates another example of the screen 20 that is displayed on the display device of the user terminal 10A that is operated by the user A. The screen 20 is a chat screen in a chat room. The user A and the user B participate in the chat room.

The user A operates the user terminal 10A and posts a message to a participant in the chat room, that is, the user B. The icon 22 that is the symbol figure of the user A is displayed on the screen 20. For example, the message 24 that a "group photograph is transmitted" is posted. The attached file 26 the name of which is the "group photograph" is attached to the message 24.

The chatbot that functions on the bot server 16 analyzes the content of the message 24 that is posted by the user A and determines whether the attached file 26 is present. If it is determined that the attached file 26 is present and that it is necessary to determine whether the size of the attached file 26 is appropriate for the user B, the user information DB 165 is accessed, the user information about the user B is acquired, and whether a size that is desired by the user B for the attached file 26 is checked.

If the user information does not contain the size that is desired by the user B for the attached file 26, the chatbot performs no process.

If the user information contains the size that is desired by the user B for the attached file 26, the chatbot compares the size of the attached file 26 with the size that is desired by the user B. If the size that is desired by the user B matches the size of the attached file 26, the chatbot performs no process. The user B checks the attached file 26 and the message 24 of the user A that is displayed on the screen of the user terminal 10B that is operated by the user B, opens the attached file 26, and checks the content thereof.

If the size that is desired by the user B does not match the size of the attached file 26, the chatbot notifies the user A of determination that the size of the attached file 26 is inappropriate, and a message for inquiring about a change in the size of the attached file 26 is posted. For example, in the case where (the size of the attached file 26) > (the size that is desired by the user B) is satisfied, as illustrated in Fig. 11, the chatbot posts a message 34 that "because the size of the group photograph is large, is the size decreased?". In Fig. 11, the icon 28 that is the symbol figure of the chatbot is displayed on the screen 20 of the user terminal 10A of the user A, and the message 34 is displayed together with the icon 28. A "YES" button and a "NO" button are displayed in the message 34. The user A may select one of these.

The message 34 is displayed only on the user terminal 10A that is operated by the user A but is not displayed on the user terminal 10B that is operated by the user B.

The user A is able to recognize that the size of the attached file 26 is inappropriate by viewing the screen 20 illustrated in Fig. 11 and is able to readily change the size of the attached file 26 into the size that is appropriate for and that is desired by the user B by replying to the inquiry from the chatbot.

That is, the user A operates the "YES" button that is contained in the message 34, and the chatbot converts the initial size of the attached file 26 to the size that is desired by the user B in response to the reply "YES" from the user terminal 10A. A message that represents that the size has been converted is posted. For example, the chatbot posts a message that the "size of the attached file has been decreased".

The user A does not need to know the size that is desired by the user B in advance and is able to transmit the attached file 26 to the user B with certainty.

The chatbot posts the message 34 only to the user terminal 10A but may posts the message 34 also to the user terminal 10B as needed such that the user B is able to check the message 34. In the case where (the size of the attached file 26) < (the size that is desired by the user B) is satisfied, the chatbot performs no process, but a message that "because the size of the group photograph is small, is the size increased?" may be posted, and the size may be converted.

It is supposed that the user C participates in the chat room in addition to the user A and the user B, the size that is desired by the user B and a size that is desired by the user C for the attached file 26 that is attached to the message 24 that is posted by the user A differ from each other in some cases. Also, in these cases, the chatbot determines whether a process of converting the size is performed or is not performed in accordance with a predetermined rule. Specifically, the size is converted so as to be suitable for a stricter condition for size, the size is converted so as to be suitable for two conditions for size, or size conversions are separately carried out so as to be suitable for respective two conditions.

For example, the chatbot converts the size of the attached file 26 from As to Cs such that the size matches Cs that is the strictest condition where Bs is the size that is desired by the user B, Cs is the size that is desired by the user C, As is the size of the attached file 26, and As > Bs > Cs is satisfied for transmission to the user B and the user C.

In the case where the number of participants in a chat room is equal to or more than a predetermined number, and the number of differences among the desired sizes is equal to or more than a predetermined number, the rule may be such that the size conversions are separately carried out.

For example, in the case where the number of the second users is three or more, and the number of the differences among the desired sizes is three or more, the size conversions are separately carried out.

In an example in Fig. 11, in the case where the user information about the second user contains the desired size, no process is performed. However, in the case where the desired size is not contained, whether the process is performed or is not performed may be determined depending on the result of comparison with a predetermined threshold. Specifically, in the case where the user A and the user B participate in the chat room, and the user information does not contain the size that is desired by the user B for the attached file 26, the chatbot performs a process, that is, compares the size of the attached file 26 with a predetermined threshold. If (the size of the attached file 26) < the threshold is satisfied, no process is performed. If (the size of the attached file 26) ≥ the threshold is satisfied, the message 34 that "because the size of the group photograph is large, is the size decreased?" is posted.

Fig. 12 illustrates another example of the screen 20 that is displayed on the display device of the user terminal 10A that is operated by the user A. The screen 20 is a chat screen in a chat room. The user A, the user B, and the user C participate in the chat room.

The user A operates the user terminal 10A and posts a message to participants in the chat room, that is, the user B and the user C. The icon 22 that is the symbol figure of the user A is displayed on the screen 20. For example, the message 24 that "please conduct a review" is posted. The attached file 26 the name of which is the "development plan" is attached to the message 24.

The chatbot analyzes the content of the message 24 that is posted by the user A and determines whether the attached file 26 is present. If it is determined from the content of the message 24 that the attached file 26 is present and that it is necessary to check whether the user B and the user C access and review the attached file 26, a message 36 that "has the development plan been checked?" is produced and posted to the user terminal 10B that is operated by the user B and the user terminal 10C that is operated by the user C. A "YES" button and a "NO" button are displayed in the message 36. The user B and the user C may select one of these.

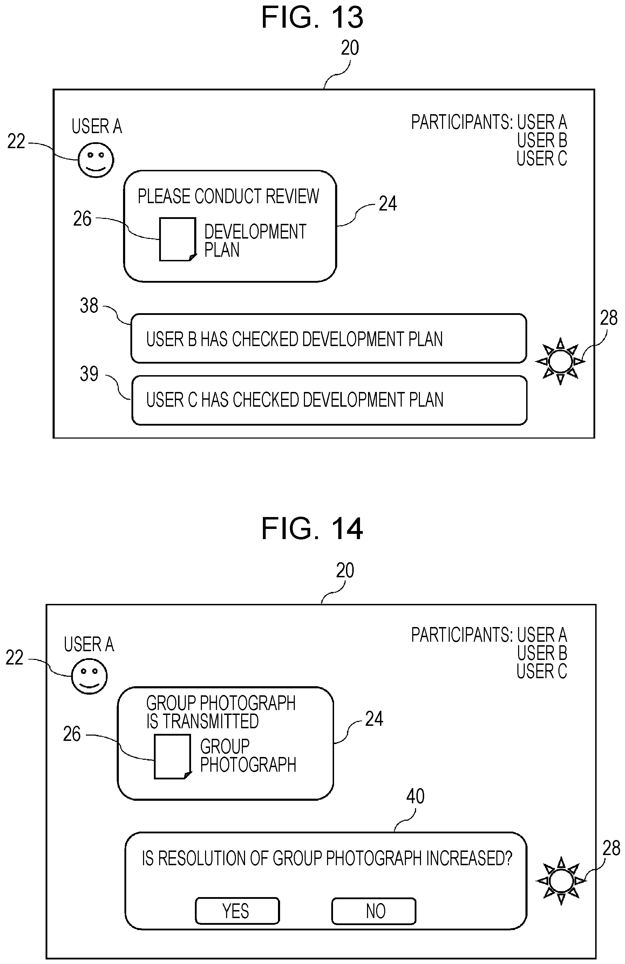

Fig. 13 illustrates the screen 20 of the user terminal 10A in the case where the user B and the user C access the attached file 26 and check the content thereof, and the "YES" button is operated in response to the message 36. The chatbot posts a message 38 that the "user B has checked the development plan" and a message 39 that the "user C has checked the development plan" in response to the replies from the user B and the user C to the user terminal 10A.

The user A is able to confirm the fact that the user B and the user C have reviewed the attached file 26 by viewing the messages 38 and 39.

Fig. 14 illustrates another example of the screen 20 that is displayed on the display device of the user terminal 10A that is operated by the user A. The screen 20 is a chat screen in a chat room. The user A, the user B, and the user C participate in the chat room.

The user A operates the user terminal 10A and posts a message to participants in the chat room, that is, the user B and the user C. The icon 22 that is the symbol figure of the user A is displayed on the screen 20. For example, the message 24 that a "group photograph is transmitted" is posted. The attached file 26 the name of which is the "group photograph" is attached to the message 24.

The chatbot analyzes the content of the message 24 that is posted by the user A and determines whether the attached file 26 is present. If it is determined from the content of the message 24 that the attached file 26 is present and that it is necessary to determine whether the resolution of the attached file 26 is appropriate for the user B and the user C, the user information DB 165 is accessed, the user information about the user B and the user C is acquired, and whether resolution that is desired by the user B and the user C for the attached file 26 is present is checked.

If the user information does not contain the resolution that is desired by the user B and the user C for the attached file 26, the chatbot performs no process.

If the user information contains the resolution that is desired by the user B and the user C for the attached file 26, the chatbot compares the resolution of the attached file 26 with the resolution that is desired by the user B and the user C.

If the resolution that is desired by the user B and the user C matches the resolution of the attached file 26, the chatbot performs no process. The user B and the user C check the attached file 26 and the message 24 of the user A that is displayed in the screens of the user terminal 10B and the user terminal 10C that are operated by the user B and the user C, open the attached file 26, and check the content thereof.

If the resolution that is desired by at least the user B or the user C does not match the resolution of the attached file 26, the chatbot notifies the user A of determination that the resolution of the attached file 26 is inappropriate and posts a message for inquiring about a change in the resolution of the attached file 26. For example, in the case where (the resolution of the attached file 26) < (the resolution that is desired by the user B) is satisfied, as illustrated in Fig. 14, the chatbot posts a message 40 that "is the resolution of the group photograph increased?". In Fig. 14 the icon 28 that is the symbol figure of the chatbot is displayed on the screen 20 of the user terminal 10A of the user A, and the message 40 is displayed together with the icon 28. A "YES" button and a "NO" button are displayed in the message 40. The user A may select one of these.

The message 40 is displayed only on the user terminal 10A that is operated by the user A but is displayed on neither the user terminal 10B nor user terminal 10C. The user A is able to recognize that the resolution of the attached file 26 is inappropriate by viewing the screen 20 illustrated in Fig. 14 and is able to readily change the resolution of the attached file 26 into the resolution that is desired by the user B by replying to the inquiry from the chatbot.

That is, the user A operates the "YES" button that is contained in the message 40, and the chatbot converts the initial resolution of the attached file 26 to the resolution that is desired by the user B in response to the reply "YES" from the user terminal 10A. A message that represents that the resolution has been converted is posted. For example, the chatbot posts a message that the "resolution of the attached file has been increased".

If the resolution that is desired by the user C matches the resolution of the attached file 26, the chatbot maintains the resolution of the attached file 26 in the initial state.

The user A does not need to know the resolution that is desired by the user B and the user C in advance and is able to transmit the attached file 26 to the user B and the user C with certainty.

In an example described above, the message 40 that "is the resolution of the group photograph increased?" is posted to the user A who posts the message 24 for inquiry. However, the message 40 may be posted to the user B or the user C who receives the message 24 for inquiry.

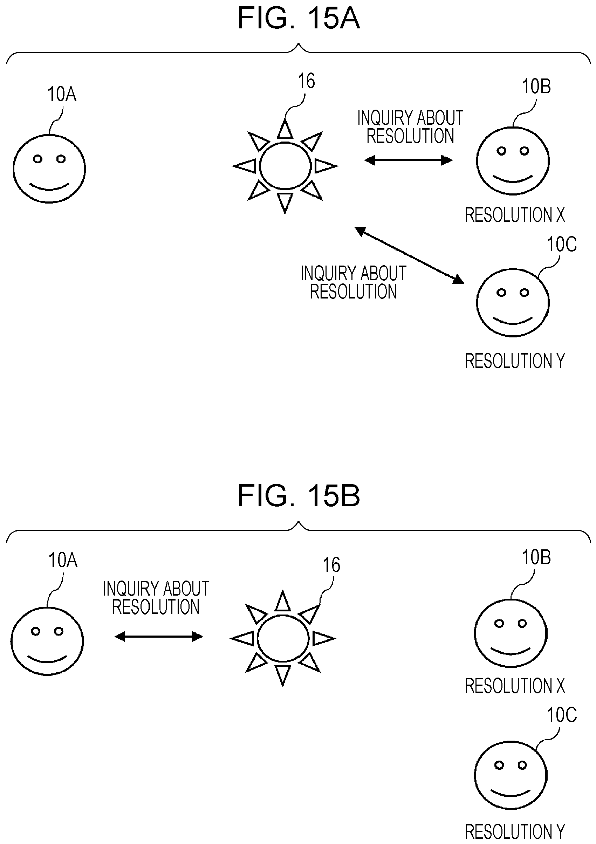

Fig. 15A and Fig. 15B schematically illustrate control on the conversion of the resolution of the attached file 26 in this case. The figures illustrate the flow of processing among the user terminal 10A that is operated by the user A, the user terminal 10B that is operated by the user B, the user terminal 10C that is operated by the user C, and the bot server 16 that functions as the chatbot.

When it is determined whether the resolution that is desired by the user B and the user C is needed, based on the result of analysis of the content of the message from the user terminal 10A and information about whether the attached file 26 is present, the bot server 16 accesses the user information DB 165 and acquires information about the desired resolution that is contained in the user information about the user B and the user C. The resolution of the attached file 26 and the acquired resolution that is desired by the user B and the user C are compared with each other. When (the resolution of the attached file 26) = (the resolution that is desired by the user B) is satisfied, and (the resolution of the attached file 26) = (the resolution that is desired by the user C) is satisfied. The bot server 16 performs no process. The phrase "resolution is equal to another resolution" means that the resolution is equal to the other resolution within a predetermined permissible range and does not necessarily mean that the resolution is precisely equal to the other resolution.

When (the resolution of the attached file 26) = (the resolution that is desired by the user B) is satisfied, but (the resolution of the attached file 26) ≠ (the resolution that is desired by the user C) is satisfied, the bot server 16 posts a message for inquiring at the user terminal 10C about the conversion of the resolution.

When (the resolution of the attached file 26) = (the resolution that is desired by the user C) is satisfied, and (the resolution of the attached file 26) ≠ (the resolution that is desired by the user B) is satisfied, the bot server 16 posts a message for inquiring at the user terminal 10B about the conversion of the resolution.

When (the resolution of the attached file 26) ≠ (the resolution that is desired by the user B) is satisfied, and (the resolution of the attached file 26) # (the resolution that is desired by the user C) is satisfied, the bot server 16 posts a message for inquiring at user terminal 10B and the user terminal 10C about the conversion of the resolution.

Fig. 15A illustrates a process where R is the resolution of the attached file 26, the resolution that is desired by the user B is X, and the resolution that is desired by the user C is Y. Since R ≠ X ≠ Y is satisfied, the bot server 16 posts a message for inquiring at the user terminal 10B and the user terminal 10C about the conversion of the resolution.

The user B and the user C reply to the inquiry by "YES" or "NO". The bot server 16 converts the resolution of the attached file 26 for the reply "YES" or maintains the resolution of the attached file 26 in the initial state for the reply "NO" in response to the replies from the user B and the user C.

Fig. 15B illustrates another process where R is the resolution of the attached file 26, the resolution that is desired by the user B is X, and the resolution that is desired by the user C is Y. Since R ≠ X ≠ Y is satisfied, the bot server 16 posts a message for inquiring at the user terminal 10A about the conversion of the resolution.

The user A replies to the inquiry by "YES" or "NO". The bot server 16 converts the resolution of the attached file 26 for the reply "YES" or maintains the resolution of the attached file 26 in the initial state for the reply "NO" in response to the reply from the user A.

In Fig. 15A, the inquiry at the users who receive the message 24 is conducted. In Fig. 15B, the inquiry at the user who transmits the message 24 is conducted. The case where the inquiry at the receivers is conducted is efficient because the user who transmits the message 24 does not need another action in the case where discontent about the image quality of the attached file 26 due to the resolution of the attached file 26 that differs from the desired resolution may be ignored. In addition, in the case where the desired resolution differs among the users who are the receivers, and multiple attached files 26 that contain converted resolution are produced, the receivers act, and this enables efficient processing.

Whether the inquiries at the receivers are conducted as illustrated in Fig. 15A or the inquiry at the transmitter is conducted as illustrated in Fig. 15B may be freely determined. The chatbot may automatically control for switching between these. Specific examples are as follows. In the case where the desired resolution differs among users, and multiple attached files 26 that contain converted resolution are presumably produced, the inquiries at the receivers are conducted. In the case where all users have the same desired resolution, the inquiry at the transmitter is conducted.

Regarding the resolution of the file, the resolution of the attached file 26 may not be compared with the resolution that is desired by the second user but may be compared with a predetermined threshold, and whether the process is performed may be determined depending on the result of comparison as in the size of the file.

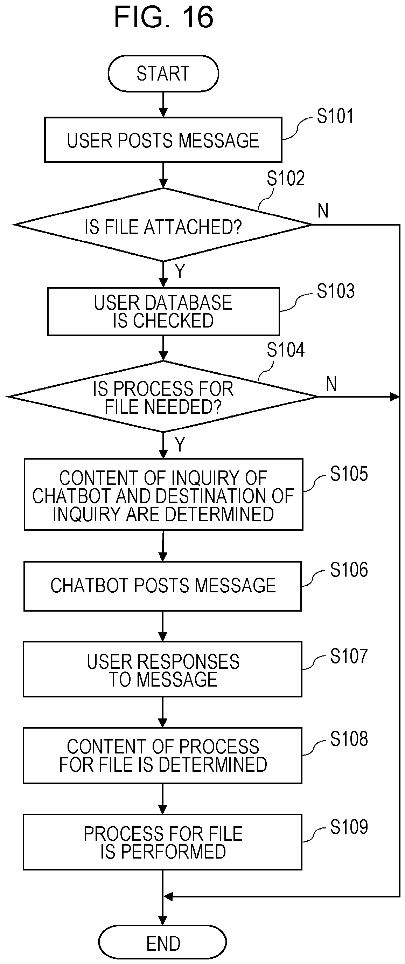

Fig. 16 illustrates a flowchart of a process according to the present exemplary embodiment. The user A first operates the user terminal 10A and posts a message (S101).

The chatbot determines whether a file is attached to the message that is posted by the user A (S102). It no file is attached, a process described later is skipped (NO at S102) .

If the file is attached (YES at S102), the user information DB 165 is accessed, the user information is acquired (S103), and whether the process for the attached file is needed is determined in accordance with a predetermined rule (S104). More specifically, the determination is made in accordance with the predetermined rule based on the result of analysis of the content of the posted message and the size and the resolution of the attached file. Regarding whether an access right is present or absent, for example, whether an access right is present or absent is determined in accordance with a rule that an "inquiry about whether the access right is granted is conducted in the case where a user who is the receiver does not have the access right. If the user does not have the access right, it is determined that the process for the file is needed. If the process for the file is not needed, a process described later is skipped (NO at S104).

If the process for the file is needed (YES at S104), the content of the inquiry of the chatbot and the destination of the inquiry are determined in accordance with a rule (S105), and the chatbot posts a message for the inquiry (S106). For example, if the user B does not have the access right to the attached file, it is determined that the content of the inquiry of the chatbot is about an inquiry about whether the access right is granted to the user B, and that the destination of the inquiry is the user A, and the message is posted.

When the user responses to the message for the inquiry from the chatbot (S107), the chatbot determines the content of the process for the file, based on the response (S108) and performs the process for the file (S109). For example, when the response of the user A is "YES", the chatbot grants the user B the access right to the attached file, updates the user information in the user information DB 165, and posts, to the user A, a message that the access right has been granted to the user B.

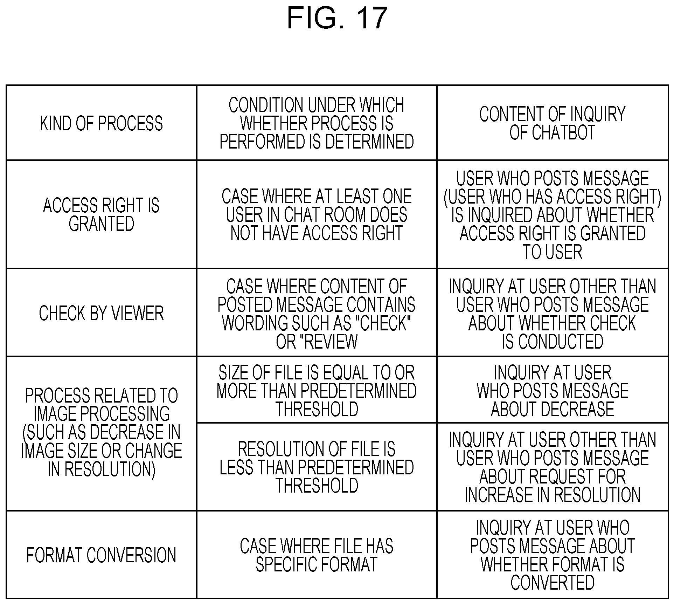

Fig. 17 illustrates examples of the rule when whether the process for the file is needed is determined. A condition under which whether the process is performed is determined and the content of the inquiry of the chatbot are defined for every kind of the process.

In the case where the kind of the process is a process of "granting the access right", the condition under which whether the process is performed is determined is the "case where a user in a chat room does not have the access right", and the content of the inquiry of the chatbot is "inquiry at the user who posts the message about whether the access right is granted to the user. The content of the inquiry of the chatbot may be an "inquiry at the user who posts the message and a user who has the right to grant the access right about whether the access right is granted. An additional rule may be that "whether the access right is granted is determined by a majority vote of users".

In the case where the kind of the process is a "check by a viewer", the condition under which whether the process is performed is determined is the "case where the content of the posted message contains wording such as a "check" or a "review", and the content of the inquiry of the chatbot is an "inquiry at a user other than the user who posts the message about whether the check is conducted".

In the case where the kind of the process is a process "related to image processing", the condition under which whether the process is performed is determined is the "case where the size of the file is equal to or more than a predetermined threshold", and the "size of the file does not match the desired size", the "resolution of the file is less than a predetermined threshold", or the "resolution of the file does not match the desired resolution". The content of the inquiry is an "inquiry at the user who posts the message about whether the size is changed", or an "inquiry at a user other than the user who posts the message about whether the resolution is changed".

Note that the destination of the inquiry differs between the case where the size of the file is equal to or more than a predetermined threshold and the case where the resolution of the file is less than a predetermined threshold. This is because, in the latter case, there is a possibility that a user who is the receiver other than the user who posts the message permits resolution less than the threshold, and this possibility is considered.

In the case where the kind of the process is a process of "format conversion", the condition under which whether the process is performed is determined is the "case where the file has a specific format", and the content of the inquiry is an "inquiry at the user who posts the message about whether the format is converted".

The exemplary embodiment of the present disclosure is described above. The present disclosure, however, is not limited to the exemplary embodiment, and various modifications may be made.

For example, regarding the rule illustrated in Fig. 17, in the case where multiple processes satisfy the condition under which whether the processes are performed is determined, the chatbot may determine which process is performed based on a predetermined priority.

Specifically, in the case where a user in a chat room does not have the access right, and the size of the file is equal to or more than a predetermined threshold, a process of inquiring at the user who posts the message about whether the access right is granted to the user is performed if the priority of the former condition under which whether the process is performed is determined is high. In the case where the access right is granted after the process is performed, a process of inquiring about the size of the file may be subsequently performed.

The foregoing description of the exemplary embodiments of the present disclosure has been provided for the purposes of illustration and description. It is not intended to be exhaustive or to limit the disclosure to the precise forms disclosed. Obviously, many modifications and variations will be apparent to practitioners skilled in the art. The embodiments were chosen and described in order to best explain the principles of the disclosure and its practical applications, thereby enabling others skilled in the art to understand the disclosure for various embodiments and with the various modifications as are suited to the particular use contemplated. It is intended that the scope of the disclosure be defined by the following claims and their equivalents.

## Claims

1. A message providing system comprising:
an acquisition unit that acquires user information about a user who communicates a message in a chat room in a message service; and
a processor configured to:
run a program;
determine whether a process for a file is needed based on the user information in a case where a message that shares the file is transmitted;
inquire at a first user who is a transmitter of the message about the process if it is determined that the process for the file is needed; and
perform the process for the file in a case where an instruction for performing the process is received from the first user.

2. The message providing system according to Claim 1,
wherein the user information is whether a second user who is a receiver of the message has an access right to the file, and
wherein the processor is configured to inquire at the first user about whether the access right is granted to the second user if it is determined that the second user does not have the access right to the file.

3. The message providing system according to Claim 2,
wherein the processor is configured to inquire only at the first user about whether the access right is granted and is configured not to inquire at the second user.

4. The message providing system according to Claim 2,
wherein the processor is configured to inquire at the first user and the second user about whether the access right is granted.

5. The message providing system according to Claim 1,
wherein the user information is a content of the message that is transmitted by the first user.

6. The message providing system according to Claim 5,
wherein the processor is configured to inquire at a second user about whether the file is checked if the content of the message contains wording that represents a check.

7. The message providing system according to Claim 1,
wherein the user information is at least a file size, resolution, or a file format that is desired by a second user for the file, and
wherein the processor is configured to inquire about whether at least a file size, resolution, or a file format of the file is converted if at least the file size, the resolution, or the file format of the file does not match the file size, the resolution, or the file format that is desired by the second user.

8. The message providing system according to Claim 1,
wherein the user information is at least a file size or resolution that is desired by a second user for the file, and
wherein the processor is configured to inquire about whether at least the file size or the resolution of the file is converted if the file size of the file is equal to or more than a threshold, or the resolution of the file is less than a threshold.

9. The message providing system according to Claim 7 or Claim 8,
wherein the processor is configured to inquire at the first user and the second user.

10. A message providing system comprising:
an acquisition unit that acquires user information about a user who communicates a message in a chat room in a message service; and
a processor configured to:
run a program;
determine whether a process for a file is needed based on the user information in a case where a message that shares the file is transmitted;
select a first user who is a transmitter of the message or a second user who is a receiver of the message depending on a kind of the process to inquire about the process if it is determined that the process for the file is needed; and
perform the process for the file in a case where an instruction for performing the process is received.

11. The message providing system according to Claim 10,
wherein the processor is configured to inquire at the first user if the kind of the process includes a single kind and is configured to inquire at the second user if the kind of the process includes multiple kinds.

12. The message providing system according to Claim 11,
wherein the user information is at least a file size, resolution, or a file format that is desired by the second user for the file, and
wherein the processor is configured to inquire at the second user if at least a file size, resolution, or a file format of the file does not match the file size, the resolution, or the file format that is desired by the second user and if the kind of the process includes multiple kinds because at least the file size, the resolution, or the file format that is desired by the second user for the file differs from a file size, resolution, or a file format that is requested by another second user for the file.

13. The message providing system according to Claim 11,
wherein the user information is at least a file size, resolution, or a file format that is desired by the second user for the file, and
wherein the processor is configured to inquire at the first user if at least a file size, resolution, or a file format of the file does not match the file size, the resolution, or the file format that is desired by the second user and if the kind of the process includes a single kind because at least the file size, the resolution, or the file format that is desired by the second user for the file is the same as a file size, resolution, or a file format that is requested by another second user for the file.

14. The message providing system according to Claim 1 or Claim 10,
wherein the processor is configured to inquire by using message transmission with a chatbot.

15. A program causing a computer to execute a process comprising:
communicating a message to a user in a chat room in a message service;
determining whether a process for a file is needed based on user information about the user in a case where a message that shares the file is transmitted;
inquiring at a first user who is a transmitter of the message about the process if it is determined that the process for the file is needed; and
performing the process for the file in a case where an instruction for performing the process is received from the first user.
